Europäisches Patentamt

**European Patent Office**

**Office européen des brevets**

(19)

(11) Publication number: **0 590 184 A1**

## EUROPEAN PATENT APPLICATION

(12)

(21) Application number: **92116685.6**

(22) Date of filing: **29.09.92**

(51) Int. Cl.5: **C02F 1/72**, C02F 1/76, C02F 1/00

(43) Date of publication of application:
**06.04.94 Bulletin 94/14**

(84) Designated Contracting States:
**AT BE CH DE DK ES FR GB GR IT LI LU MC NL PT SE**

(71) Applicant: **Bogie, Kenneth David**
**422 Pecan Place,**
**Die Wilgers**
**0041, Pretoria, Transvaal(ZA)**
Applicant: **Elk, Rodney Stephen**
**324 Acornhoek Street,**
**Faerie Glen**
**0043, Pretoria, Transvaal(ZA)**

(72) Inventor: **Bogie, Kenneth David**
**422, Pecan Place,**
**Die Wilgers**
**0041, Pretoria, Transvaal(ZA)**

(74) Representative: **VOSSIUS & PARTNER**
**Postfach 86 07 67**
**D-81634 München (DE)**

(54) **Water sanitisation.**

(57) The invention relates to a method of sanitising water by the in situ oxidation of halogen ions to hypohalogen ions and to the composition for use in the method. The halogen ions may be bromine ions and the oxidation may be achieved with hydrogen peroxide or monopersulphate.

EP 0 590 184 A1

THIS invention relates to a process for sanitising a body of water and to a sanitisation composition for use in sanitising a body of water.

In this specification the term sanitisation is used to denote a process whereby an algicidal and bacterio-static effective amount of a sanitisation composition is introduced into a body of water.

According to the invention there is provided a process for sanitising a body of water comprising the steps of adding to the water a water soluble halogen substance capable on dissolution of releasing halogen ions into the water, and adding an oxidising agent to the water, which oxidising agent is capable in situ of oxidising the halogen ions to form hypohalogen ions, and regulating the pH of the water to allow the oxidising reaction to occur.

In the preferred form of the invention the halogen substance is preferably a bromine substance capable of releasing bromine ions in the water to be available for oxidisation to form hypobromite ions.

The process preferably includes the step of charging the water with a bromide salt prior to adding the oxidising agent to the water. In one form of the invention the water may be charged with between about 0,001% and 0,0075% [mass/volume] of the bromide salt. The bromide salt is preferably sodium bromide.

The oxidising agent may be hydrogen peroxide but is preferably monopersulphate. The monopersulphate may be present as the triple salt $KHSO_4.K_2SO_4.2KHSO_5$. The amount of monopersulphate added to the water may be between about 0,001% and 0,02% [mass/volume]. However, it will be appreciated that other suitable oxidising agents may also be used.

The pH of the water is preferably between about 6,5 and about 8 at the time the oxidising agent in the form of monopersulphate is added. When hydrogen peroxide is used as oxidising agent, the pH of the water is preferably between 7 and 7,5.

Further according to the invention an anti-staining agent may be added to the water. The anti-staining agent may be disodium dihydrogen pyrophosphate. In one form of the invention the amount of dihydrogen pyrophosphate added to the water may be about 0,001% [mass/volume].

The oxidising agent may be added to the water in tablet form. The anti-staining agent may be combined with the oxidising agent in the tablet.

According to a further aspect of the invention there is provided an oxidising agent in tablet form for addition to a body of water containing at least one bromine salt to sanitise the water. The tablet may include an anti-staining agent and optionally a suitable water-soluble binding/release agent. The binding/release agent may be polyethylene glycol, carbowax, talc, Kelacid, starch, magnesium stearate or carboxylic acids. The binding/release agent may constitute about 4% to 20% by weight of the tablet.

The tablet may in addition include at least one colourant for imparting a colour to the water. The colourant may be a water-soluble dye. The amount of dye contained in the tablet may be up to about 2% by weight of the tablet. Two suitable dyes are sold under the trade names **FD+C Blue No. 2** and **Hexacol Carmen Supra.**

According to another aspect of the invention a composition for sanitising a body of water includes a bromide salt and an oxidising agent.

The composition may also include an anti-staining agent and/or a colourant.

The amount of oxidising agent, anti-staining agent and colourant may be present in the composition in substantially the same percentages in which they are present in the tablet described above, with the balance of the composition comprising the bromine salt. The composition could of course be provided in tablet form, as opposed to a granular form, in which case the balance of the composition would be made up of a bromine salt and a suitable binding/release agent.

The tablet may be compacted to be capable of dissolving in a controlled manner when placed in the water.

The invention will now be illustrated by way of some non-limiting example.

**EXAMPLE 1**

A test pool of capacity of about 47,000 litres was selected. The pool was charged with 1.5 kilos of sodium bromide, the charging procedure comprising simply broadcasting the sodium bromide over the surface of the pool. The pool was then allowed to stabilise for three hours prior to charging it with one kilogram of an oxidising agent sold commercially by E.I. du Pont de Nemours under the trade name **Oxone**. Again the **Oxone** was broadcast over the surface of the pool. The active ingredient of **Oxone** is potassium peroxymonosulphate.

An alternative to broadcasting the granules of **Oxone** over the surface of the pool, is to introduce tablets of the compound into the pool such that a controlled, slow release and dissolution of the compound takes place. These tablets were produced with the aid of a compaction machine capable of exerting a compaction force of 15,000-50,000 Kgf. The tablets should ideally incorporate a binding/release agent to aid the compaction and slow release process in water. Binding/release agents found acceptable include most of the recognised binding/release agents used in tabletting such as carbowax, magnesium stearate, talc, Kelacid, starch and percarboxylic acid. The tablets may also incorporate a colourant which is transferred to the swimming pool as the tablets dissolve, imparting a turquoise or blue colour to the water. The type of colourant preferably selected is one that fades in the presence of the oxidising agent, thereby eliminating the risk of discolouration of the tiles around the pool.

The following test procedures were adopted immediately before, and at 12 hours, 48 hours and five days after charging of the pool with sodium bromide and Oxone as described above:-

Water testing procedure

The disinfectant residual was read as bromine. To correct the readings of a standard chlorine test kit to read bromine, it was found necessary to multiply the reading obtained with a chlorine kit by 2,25. The pH of the pool was also recorded at this stage and the bacteriological tests referred to below also included a test for **pseudomonas aeuruginosa, E. coli** and **S. faecalis**.

To supplement the free bromine reading obtained via the chlorine test kit, free bromine as HOBr and KOBr, was determined via ultra-violet U.V. spec. The acid hypobromite solution absorbed near 263 nm and the chlorine hypobromite solution absorbed near 330 nm. The isobestic point appeared near 297 nm molar absorbencies are of the order of approximately 800 for HOBr and approximately 1,000 for KOBr.

The results of the trial were as follows:

| Day | Oxone gram added | NaBr gram added | Sample | Bacteria Count per cc. | Soda Ash g added | Atmospheric Temperature | Wind |
|---|---|---|---|---|---|---|---|
| 1 | 1 000 | 1 500 | No | - | - | 24 | SE(S) |
| 4 | 250 | - | Yes | 38 | - | 27 | Slight |
| 8 | 250 | 100 | No | - | - | 26 | Slight |
| 12 | 500 | - | Yes | 80 | 50 | 23 | SE(M) |
| 16 | 250 | - | No | - | - | 24 | SE(M) |
| 20 | 250 | 100 | Yes | 30 | - | 28 | Slight |

**EXAMPLE 2**

A test pool of capacity 20,000 litres was selected. The pool was charged with 0,8 kilos of sodium bromide, as described in Example 1. The pool was allowed to stabilise for three hours prior to charging it with 600 g of an oxidising agent sold commercially by Degussa under the trade name **Caroat**. Again the **Caroat** was broadcast over the surface of the pool. The active ingredient of **Caroat** is potassium peroxymonosulphate.

The water from this pool was tested as described in Example 1 and comparable results were obtained.

**EXAMPLE 3**

A test similar to the test described in Example 2 was performed using sodium chloride as halogen source and **Oxone** as oxidising agent. No bacterial counts were taken in this case but the pool, on visual inspection, stayed algae-free for four days.

**EXAMPLE 4**

Disinfectant Test-Comparison of Hypochlorite and **Oxone**/NaBr

Test Solutions

For each of the test solutions listed below, three flasks were prepared containing 199 ml of the solutions made up to the final concentrations as shown in the Table I below. The solutions were made up using Cl demand free, unbuffered, fresh distilled $H_2O$ previously prepared in a 1 litre volumetric flask, where the Cl demand had been satisfied by the addition of 2.5 ml of the 200 ppm NaOCl standard solution.

After one set of flasks was inoculated with **E. coli,** another set with **S. faecalis** and the third with **S. aureus**, they were sampled by placing 1 ml aliquots withdrawn from each at 0,5, 1, 2, 3, 4, 5 and 10 minutes post-inoculation into neutralizer blanks from which subsequent serial plate counts and liquid sub-cultures were made using appropriate medium.

The surviving viable bacterial cells, observed as colony-forming units on the serial plates following incubation for 48 hours at 37°C and by the presence of turbidity in the liquid sub-culture tubes after their incubation for 48 hours at 37°C, are given in the Table I.

TABLE No. 1.

| Test Solution | Sampling Time in Minutes | Escherichia coli ( O6 ) | | Streptococcus faecalis ( 10 – 20F ) | | Staphylococcus aureus ( 08 ) | |
|---|---|---|---|---|---|---|---|
| | | Plate Count | Subcult Tubes | Plate Count | Subcult Tubes | Plate Counts | Subcult Tubes |
| 20 ppm Oxone 13.3 ppm NaBr | 0 | $28 \times 10^5$ | – | $40 \times 10^5$ | – | $12 \times 10^5$ | – |
| | 0.5 | 100 | 0/3 | 100 | 0/3 | 100 | 0/3 |
| | 1 | 100 | 0/3 | 100 | 0/3 | 100 | 0/3 |
| | 2 | 100 | 0/3 | 100 | 0/3 | 100 | 0/3 |
| | 3 | 100 | 0/3 | 100 | 0/3 | 100 | 0/3 |
| | 4 | 100 | 0/3 | 100 | 0/3 | 100 | 0/3 |
| | 5 | 100 | 0/3 | 100 | 0/3 | 100 | 0/3 |
| | 10 | 100 | 0/3 | 100 | 0/3 | 100 | 0/3 |
| 2 ppm NaOCL | 0 | $10 \times 10^6$ | – | $69 \times 10^5$ | – | $17 \times 10^5$ | – |
| | 0.5 | 100 | 0/3 | 100 | 1/3 | 100 | 0/3 |
| | 1 | 100 | 0/3 | 100 | 0/3 | 100 | 0/3 |
| | 2 | 100 | 0/3 | 100 | 0/3 | 100 | 0/3 |
| | 3 | 100 | 0/3 | 100 | 0/3 | 100 | 0/3 |
| | 4 | 100 | 0/3 | 100 | 0/3 | 100 | 0/3 |
| | 5 | 100 | 0/3 | 100 | 0/3 | 100 | 0/3 |
| | 10 | 100 | 0/3 | 100 | 0/3 | 100 | 0/3 |

## EXAMPLE 5

A further laboratory test was conducted to demonstrate the algicidal and bactericidal efficacy of the combined product of the present invention in comparison to 1 ppm free chlorine under simulated swimming pool conditions. This test was conducted by the South African Bureau of Standards [S.A.B.S.] in accordance with their Standard Test Method 1158.

The product was tested under simulated swimming pool conditions using three 100 litre containers. Temperature was controlled at 20-26°C, pH at 7,2-7,6 and artificial daylight for a period of 12 hours. The water was continually aerated to simulate agitation during use of the pool. The water in one container was treated with the product by adding 2,4 g Sodium Bromide and 2 g Caroat to it while the water in another container was treated with 0,14 g Calcium hypochlorite to attain a chlorine level of 1 ppm. A third container was used as untreated control. The water in all the containers was inoculated with 20 ml of algae suspension and 1 ml bacteria suspension containing approximately $10^8$ bacteria. The following bacteria were used:

**Pseudomonas aeruginosa**; **Escherichia coli**; and **Staphylococcus aereus**.

Samples of the treated and untreated water were regularly tested for bacterial numbers and the presence of algae.

**Results**

| Day | Chlorine-treatment | | Bromine-treatment | | Untreated Control | |
|---|---|---|---|---|---|---|
| | Bacteria/ml | Visible algae | Bacteria/ml | Visible algae | Bacteria/ml | Visible algae |
| 0 | NT | - | NT | - | 82 000 | - |
| 2 | 195 | - | 120 | - | 182 000 | - |
| 3 | 6 800 | - | 3 400 | - | 115 000 | + |
| 6 | NT | - | NT | + | NT | + + + |
| NT = Not tested | | | | | | |

Visible algae was evaluated by grading as follows:

+ + + = prolific growth

+ + = good growth

+ = sparse growth

- = no growth

It will be apparent that the bromine treatment of the invention was superior to the chlorine treatment in terms of both bacteria and algae control.

**EXAMPLE 6**

A further laboratory test was performed to demonstrate the algicidal and bactericidal efficacy of a combined product according to the invention under simulated swimming pool conditions. Again the test was performed by the S.A.B.S.

The product was tested according to S.A.B.S. Standard Test Method 1158 under simulated swimming pool conditions using 100 litre containers. Temperature was controlled at 20°C-26°C, pH at 7,2-7,6 and aerated to simulate agitation during use of the pool. The water [80 litres] in two containers was treated with 3,5 g Sodium Bromide, left for an hour and then 10 ml of $H_2O_2$ was added to both containers. Subsequent addition of $H_2O_2$ is detailed in the report table. The $H_2O_2$ had a concentration of 35%.

The water in both containers was inoculated three times a week with a 20 ml algae suspension and 1 ml of a suspension containing approximately $10^8$ bacteria/ml. The following bacteria were used:

**Pseudomonas aeruginosa**; **Escherichia coli**; and **Staphylococcus aureus**.

Samples of the treated containers were regularly examined for bacterial counts and the presence at algae.

**Results**

| Day | Container 1 | | | Container 2 | | |
|---|---|---|---|---|---|---|
| | Bacteria | $H_2O_2$ added | Visible algae | Bacteria | $H_2O_2$ added | Visible algae |
| 0 | 5 300 | 10 ml | - | 5 500 | 10 ml | - |
| 2 | 2 | 1 ml | - | 1 | 0 ml | - |
| 6 | 0 | 2 ml | - | 0 | 3 ml | - |
| 9 | 3 | 1 ml | - | 1 | 0 ml | - |
| 13 | 1 | 2 ml | - | 0 | 3 ml | - |
| 16 | 1 | 1 ml | + | 20 | 0 ml | - |
| 20 | 1 | 2 ml | + | 1 | 3 ml | + |
| 23 | 1 | 1 ml | + | 2 | 0 ml | + |
| 27 | 162 | 2 ml | + | 21 | 3 ml | + |

Visible algae was evaluated as follows:

- =        no growth
+ =        sparse growth
+ + =       good growth
+ + + =     prolific growth

The long term efficacy of the product of the invention is clearly demonstrated by these results.

**EXAMPLE 7**

A further laboratory test was performed to demonstrate the algicidal and bactericidal efficacy on the combined product under simulated swimming pool conditions. Again the test was performed by the S.A.B.S.

The product was tested according to Standard Test Method 1158 under simulated swimming pool conditions using 100 litre containers. Temperature was controlled at 20-26°C, pH at 7,2-7,6 and artificial daylight for a period of 12 hours. The water was continually aerated to simulate agitation during use of the pool. The water [80 litres] in both containers was treated with 3,5 g of NaBr granules and 10 ml of $H_2O_2$ liquid initially. The $H_2O_2$ had a concentration of 50%. Further quantities of $H_2O_2$ were added as follows:

| | Container 1 | Container 2 |
|---|---|---|
| Day 2 | 1 ml | 0 ml |
| Day 6 | 2 ml | 3 ml |
| Day 9 | 1 ml | 0 ml |
| Day 13 | 2 ml | 3 ml |

The water in both containers was inoculated twice weekly with 20 ml algae suspension and 1 ml of a suspension containing approximately $10^8$ bacteria/ml.

The following bacteria were used:

Pseudomonas aeruginosa; Escherichia coli; and Staphylococcus aereus.

**Results**

| Day | Container 1 | | Container 2 | |
|---|---|---|---|---|
| | Bacteria/ ml | Visible Algae | Bacteria/ ml | Visible Algae |
| 0 | 5 300* | - | 5 500* | - |
| 2 | 2 | - | 1 | - |
| 6 | 0 | - | 0 | - |
| 0 | 3 | - | 1 | - |
| 13 | 1 | - | 0 | - |

* Count 30 minutes after the addition of organisms.

Visible algae was evaluated by grading as follows:

- = no growth

Again the efficacy of the product combination as an algicide and bacteriastat is demonstrated by this test.

**EXAMPLE 8**

Three one litre samples of cooling tower water from an industrial cooling tower which had previously been treated with biocides were used in a further trial to demonstrate the efficacy of the product of the invention.

One sample was treated with HTH to achieve a free chlorine level of 1 ppm, the second was treated with NaBr and **OXONE** to achieve the same level of free bromine, and the third was left as an untreated control. The samples were incubated for 5 days at 30°C. A bacteria count was then taken and the following results were obtained.

| | |
|---|---|
| Chlorine treated sample | 111,000 bacteria/cc |
| NaBr/Oxone treated sample | 2,200 bacteria/cc |
| Control | 730,000 bacteria/cc |

It will be apparent from the above examples that an excess of sodium bromide is added to the pool water to serve as a bank for bromine. The applicant believes that the monopersulphate or hydrogen peroxide oxidises the bromide up to a level of hypobromite. As the hypobromite is consumed by the disinfection it is converted back to bromide. It is therefore necessary to reintroduce monopersulphate into the pool water to maintain a satisfactory level of free bromine within the pool water to ensure that the water is sanitised. Additional sodium bromide need only be added to make up a loss of sodium bromide from, for example, pumping water out of the pool for backwashing purposes, evaporation, splashing etc. The applicants have found that a minimum of about 20 to 30 ppm of sodium bromide and about 20 ppm of monopersulphate are required to provide a satisfactory concentration of free bromine. The pH of the water should be maintained between about 7,0 and about 7,5 and may be adjusted by the addition of suitable acids or alkaline compounds.

The applicants have found that the composition according to the invention acts both as an algicide and as a bacteriostat.

It will be appreciated that many modifications or variations of the invention are possible without departing from the spirit or scope of the invention. It will be appreciated that the invention relates to the sanitisation of water for drinking, irrigation, industrial or recreational purposes and that minor modifications will be required depending on the use to which the water is to be put.

**Claims**

1. A process for sanitising a body of water comprising the steps of adding to the water a water soluble halogen substance capable on dissolution of releasing halogen ions into the water, and adding an oxidising agent to the water, which oxidising agent is capable in situ of oxidising the halogen ions to form hypohalogen ions, and regulating the pH of the water to allow the oxidising reaction to occur.

2. The method of claim 1 wherein the halogen substance is a bromine substance capable of releasing bromine ions in the water to be available for oxidisation to form hypobromite ions.

3. The method of claim 2 wherein the process includes the step of charging the water with a bromide salt prior to adding the oxidising agent to the water.

4. The method of claim 3 wherein the water is charged with between about 0,001% and 0,0075% [mass/volume] of the bromide salt.

5. The method of claim 3 or 4 wherein the bromide salt is sodium bromide.

6. The method of any one of claims 1 to 5 wherein the oxidising agent is hydrogen peroxide.

7. The method of any one of claims 1 to 5 wherein the oxidising agent is monopotassium monopersulphate.

8. The method of claim 7 wherein the monopersulphate is present as the triple salt $KHSO_4.K_2SO_4.2KHSO_5$.

9. The method of claim 7 or 8 wherein the amount of monopersulphate added to the water is between about 0,001% and 0,02% [mass/volume].

10. The method of claim 8 or 9 wherein the pH of the water is regulated to between about 6,5 and about 8 at the time the oxidising agent is added.

11. The method of claim 6 wherein the pH of the water is between 7 and 7,5.

12. The method of any one of claims 1 to 11 wherein an anti-staining agent is added to the water.

13. The method of claim 12 wherein anti-staining agent is disodium dihydrogen pyrophosphate.

14. The method of claim 13 wherein the amount of dihydrogen pyrophosphate added to the water is about 0,001% [mass/volume].

15. An oxidising agent in tablet form for addition to a body of water containing at least one bromine salt to sanitise the water.

16. The agent of claim 15 wherein the tablet includes an anti-staining agent and optionally a suitable water-soluble binding/release agent.

17. The agent of claim 16 wherein the binding/release agent is selected from polyethylene glycol, carbowax, talc, Kelacid, starch, magnesium stearate and percarboxylic acid.

18. The agent of claim 16 wherein the binding/release agent constitutes about 4% to 20% by weight of the tablet.

19. The agent of any one of claims 15 to 18 wherein the table includes at least one colourant for imparting a colour to the water.

20. A composition suitable for use in sanitising a body of water comprising a bromide salt and an oxidising agent.

21. The composition of claim 20 which also includes an anti-staining agent and/or a colourant.

European Patent
Office

EUROPEAN SEARCH REPORT

Application Number

EP    92 11 6685

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| E | DATABASE WPIL<br>Section Ch, Week 9310,<br>Derwent Publications Ltd., London, GB;<br>Class A97, AN 93-085887<br>& ZA-A-9 108 411 (K.D. BOGIE & R.S. ELK)<br>28 October 1992<br>* abstract *<br>--- | 1-15 | C02F1/72<br>C02F1/76<br>C02F1/00 |
| X<br><br>A | EP-A-0 265 709 (LAPORTE INDUSTRIES)<br>* page 2, line 27 - page 3, line 12 *<br>* page 3, line 28, line 46 - 52 *<br>--- | 1,2,7-11<br>15,18-20<br>17 | |
| X | WO-A-8 912 606 (TOTAL POOL CHEMICALS)<br>* claims 1-3,5,6 *<br>--- | 1-5,7 | |
| X | DE-A-2 916 148 (PEROXID CHEMIE)<br>* claims; table I *<br><br>----- | 1-6,20 | |
| | | | **TECHNICAL FIELDS SEARCHED (Int. Cl.5 )**<br><br>C02F |

The present search report has been drawn up for all claims

| Place of search | Date of completion of the search | Examiner |
|---|---|---|
| THE HAGUE | 19 MAY 1993 | KASPERS H.M.C. |

EPO FORM 1503 03.82 (P0401)